# EUROPÄISCHE PATENTANMELDUNG

(11) **EP 4 167 494 A1**
(43) Veröffentlichungstag der Anmeldung: **19.04.2023**
(21) Anmeldenummer: 21203145.4
(22) Anmeldetag: 18.10.2021
(51) Int. Cl.: H04B 3/54

(54) **ELEKTRISCHES GERÄT UND SYSTEM MIT MINDESTENS ZWEI ELEKTRISCHEN GERÄTEN**

(71) Anmelder: Hilti Aktiengesellschaft, 9494 Schaan (LI)
(72) Erfinder: Böhm, Benjamin, 82362 Weilheim (DE)
(74) Vertreter: Hilti Aktiengesellschaft Corporate Intellectual Property

(57) **Zusammenfassung**

Die Erfindung betrifft ein elektrisches Gerät, das über eine Versorgungsleitung mit elektrischer Energie versorgt werden kann, wobei das elektrische Gerät eine interne Funktionseinheit zur Übertragung von Daten aufweist, wobei die interne Funktionseinheit dazu eingerichtet ist, Daten auf die Versorgungsleitung aufzumodulieren und/oder Daten von der Versorgungsleitung zu demodulieren. In einem zweiten Aspekt betrifft die Erfindung ein System aus mindestens zwei vorgeschlagenen elektrischen Geräten, wobei ein erstes elektrisches Gerät mindestens eine erste interne Funktionseinheit zum Aufmodulieren von Daten auf die Versorgungsleitung aufweist und ein zweites elektrisches Gerät mindestens eine zweite interne Funktionseinheit zum De-Modulieren von Daten von der Versorgungsleitung aufweist. Die elektrischen Geräte können über das von ihnen gebildete System untereinander Daten austauschen, wobei es vorteilhafterweise nicht erforderlich ist, dass die elektrischen Geräte direkt miteinander über eine Versorgungsleitung verbunden sind. Es ist vielmehr ausreichend, dass die elektrischen Geräte, die miteinander kommunizieren sollen, mit einem gemeinsamen Stromnetz verbunden sind.

## Beschreibung

Die Erfindung betrifft ein elektrisches Gerät, das über eine Versorgungsleitung mit elektrischer Energie versorgt werden kann, wobei das elektrische Gerät eine interne Funktionseinheit zur Übertragung von Daten aufweist, wobei die interne Funktionseinheit dazu eingerichtet ist, Daten auf die Versorgungsleitung aufzumodulieren und/oder Daten von der Versorgungsleitung zu de-modulieren. In einem zweiten Aspekt betrifft die Erfindung ein System aus mindestens zwei vorgeschlagenen elektrischen Geräten, wobei ein erstes elektrisches Gerät mindestens eine erste interne Funktionseinheit zum Aufmodulieren von Daten auf die Versorgungsleitung aufweist und ein zweites elektrisches Gerät mindestens eine zweite interne Funktionseinheit zum De-Modulieren von Daten von der Versorgungsleitung aufweist. Die elektrischen Geräte können über das von ihnen gebildete System untereinander Daten austauschen, wobei es vorteilhafterweise nicht erforderlich ist, dass die elektrischen Geräte direkt miteinander über eine Versorgungsleitung verbunden sind. Es ist vielmehr ausreichend, dass die elektrischen Geräte, die miteinander kommunizieren sollen, mit einem gemeinsamen Stromnetz verbunden sind oder dass die Versorgungsleitungen ein solches gemeinsames Stromnetz bilden.

### Hintergrund der Erfindung:

Im Bereich der Werkzeugmaschinen sind Werkzeugmaschinen bekannt, bei denen die Energieversorgung über ein öffentliches oder Baustellen-Energienetz gewährleistet werden kann. Solche netzbetriebenen Werkzeugmaschinen können leistungsstark sein und flexibel eingesetzt werden, sofern ein öffentliches oder Baustellen-Energienetz verfügbar ist. Neben den netzbetriebenen Werkzeugmaschinen werden auf Baustellen auch zunehmend kabellose Werkzeugmaschinen eingesetzt, bei denen die Energieversorgung mit Hilfe von Akkumulatoren ("Akkus") oder Batterien gewährleistet wird. Solche Werkzeugmaschinen werden im Sinne der Erfindung bevorzugt auch als "akku- oder batteriebetriebene Werkzeugmaschinen" bezeichnet.

Eine neuere Entwicklung im Bereich der Werkzeugmaschinen sieht vor, dass Werkzeugmaschinen mit anderen Geräten auf einer Baustelle kommunizieren können sollen. Eine solche Kommunikationsfähigkeit, die im Sinne der Erfindung bevorzugt als "Konnektivität" bezeichnet wird, kann bei akku- oder batteriebetriebenen Werkzeugmaschinen besonders einfach bereitgestellt werden, indem beispielsweise die Akkus oder die Batterien "smart" ausgebildet sind. Die Formulierung "smart" wird im Sinne der Erfindung so verstanden, dass smarte Akkus und/oder Batterien in der Lage sind, eine Konnektivität der Werkzeugmaschine, mit der sie verbunden sind, mit einem anderen Gerät zu ermöglichen.

Die Möglichkeit der "smarten" Ausgestaltung von Akkus oder Batterien besteht bei netzbetriebenen Werkzeugmaschinen offensichtlich nicht, da diese keine Akkus oder Batterien aufweisen. Die Aufgabe, die der vorliegenden Erfindung zugrunde liegt, besteht somit darin, ein elektrisches Gerät bereitzustellen, das in der Lage ist, mit anderen Geräten, insbesondere in seiner Umgebung, zu kommunizieren. Darüber hinaus soll eine technische Lösung für die Ermöglichung einer solchen Konnektivität angegeben werden, die besonders einfach und unkompliziert, beispielsweise im Bereich der Werkzeugmaschinen, implementiert werden kann. Eine weitere Aufgabe der Erfindung besteht darin, ein Kommunikationssystem anzugeben, bei dem zwei oder mehr elektrische Geräte miteinander kommunizieren können.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist ein elektrisches Gerät vorgesehen, das über eine Versorgungsleitung mit elektrischer Energie versorgt werden kann. Das elektrische Gerät weist eine interne Funktionseinheit zur Übertragung von Daten auf, wobei die interne Funktionseinheit dazu eingerichtet ist, Daten auf die Versorgungsleitung aufzumodulieren und/oder Daten von der Versorgungsleitung zu de-modulieren.

Das elektrische Gerät kann vorzugsweise über eine Versorgungsleitung mit einem Stromnetz verbunden sein. Dabei kann es sich beispielsweise um ein Baustellennetz oder ein öffentliches Netz zur Versorgung mit elektrischer Energie ("Stromnetz") handeln. Die Verbindung zwischen dem elektrischen Gerät und dem Stromnetz muss aber nicht immer bestehen und kann auch gelöst werden, beispielsweise wenn das elektrische Gerät auf einer anderen Baustelle verwendet und dorthin transportiert werden soll. Mithin ist das vorgeschlagene elektrische Gerät über eine Versorgungsleitung mit elektrischer Energie versorgbar. Vorzugsweise ist das vorgeschlagene elektrische Gerät über eine Versorgungsleitung mit einem Stromnetz verbindbar, wobei diese Verbindung mit dem Stromnetz vorzugsweise lösbar ausgebildet ist. Als Versorgungsleitung kann beispielsweise ein Netzkabel verwendet werden, das vorzugsweise einen ersten Stecker zur Verbindung mit dem elektrischen Gerät aufweist und einen zweiten Stecker zur Verbindung mit dem Stromnetz. Diese zweite Verbindung kann beispielsweise über eine Stecker-Steckdose-Verbindung realisiert werden. Vorzugsweise weist das elektrische Gerät eine Schnittstelle zur Aufnahme des ersten Steckers des Netzkabels auf. Das bedeutet im Sinne der Erfindung bevorzugt, dass das elektrische Gerät eine bevorzugt mechanische Schnittstelle zur Aufnahme eines Steckers der Versorgungsleitung aufweisen kann. Es stellt einen wesentlichen Vorteil der Erfindung dar, dass es sich bei dem Netzkabel um ein handelsübliches Netzkabel ohne technische Modifikationen handeln kann.

Es ist im Sinne der Erfindung bevorzugt, dass die Versorgungsleitungen Netzstecker aufweisen, die mit Schnittstellen der elektrischen Geräte verbunden werden können. Diese Verbindung kann insbesondere über eine Steckverbindung erfolgen. Vorzugsweise können die elektrischen Geräte die für ihren Betrieb erforderliche Energie mit Hilfe des vorgeschlagenen Netzkabels aus einem Stromnetz beziehen. Der Stecker der Versorgungsleitung dient dabei insbesondere zur Verbindung des Netzkabels mit dem elektrischen Gerät. Insbesondere kann es sich bei dem elektrischen Gerät um eine solche Werkzeugmaschine handeln, die nicht akkumulator- oder batteriebetrieben ist, sondern mit einem Netzkabel an ein öffentliches und/oder Baustellen-Energienetz angeschlossen werden kann. Für diesen Anschluss kann beispielsweise eine Versorgungsleitung verwendet werden, die im Kontext der vorliegenden Erfindung darüber hinaus dazu eingerichtet ist, Daten zu übertragen. Die Datenübertragung über die Versorgungsleitungen erfolgt vorzugsweise dadurch, dass die zu übertragenen Daten auf die Versorgungsleitungen aufmoduliert oder von den Versorgungsleitungen de-moduliert werden. Dieses Auf- oder De-Modulieren der Daten erfolgt insbesondere durch die internen Funktionseinheiten der elektrischen Geräte.

Der Stecker umfasst vorzugsweise eine elektrische Anschlussanordnung, die Kontakte aufweist. In einer bevorzugten Ausgestaltung der Erfindung stellen die Stecker der Versorgungsleitungen drahtgebundene Schnittstellen dar, wobei eine Buchse des Steckers insbesondere zwei Energieversorgungskontakte aufweist. Die Kontakte können im Sinne der Erfindung auch als Pins bezeichnet werden, wobei die Begriffe "Pin" und "Kontakt" vorzugsweise im Sinne der Erfindung synonym verwendet werden. Die Pins bzw. die Energieversorgungskontakte bilden vorzugsweise eine elektrische Anschlussanordnung des Steckers, wobei die Versorgungsleitung über die elektrische Anschlussanordnung bzw. über den Stecker mit einem elektrischen Gerät, das mit Strom versorgt werden soll, verbunden werden kann.

Elektrische Geräte, die über ein Stromnetz mit elektrischer Energie versorgt werden können, werden im Sinne der Erfindung als "netzbetrieben" bezeichnet. Netzbetriebene, elektrische Geräte unterscheiden sich von akku- oder batteriebetriebenen Geräten dadurch, dass sie üblicherweise keine Batterien und/oder Akkumulatoren ("Akkus") zur Versorgung mit elektrischer Energie aufweisen.

Es kam für die Fachwelt überraschend, dass mit der Erfindung eine einfache, kostengünstige und unkomplizierte Möglichkeit geschaffen werden kann, elektrische, vorzugsweise netzbetriebene Geräte zur gemeinsamen Kommunikation untereinander zu ertüchtigen. Dieser Vorteil der Erfindung wird insbesondere durch die Vorsehung der mindestens einen internen Funktionseinheit erreicht, die zum Aufmodulieren von Daten auf und/oder zum De-Modulieren von Daten von einer Versorgungsleitung eingerichtet ist. Mit anderen Worten kann das elektrische Gerät beispielsweise eine interne Funktionseinheit zum Aufmodulieren von Daten auf eine Versorgungsleitung umfassen. Dadurch ist das elektrische Gerät vorteilhafterweise zum Schreiben von Daten in das Stromnetzt ausgestattet. Alternativ oder zusätzlich kann das elektrische Gerät eine interne Funktionseinheit zum De-Modulieren von Daten von einer Versorgungsleitung umfassen. Dadurch ist das elektrische Gerät vorteilhafterweise zum Lesen von Daten aus dem Stromnetzt ausgestattet. Bei den zwischen den elektrischen Geräten ausgetauschten Daten kann es sich beispielsweise um maschinenbezogene Daten, wie Betriebsparameter, Identifikationskennungen, Steuer- oder Meldebefehle oder -signale, Positionsdaten (beispielsweise GPS) oder Betriebszustände, wie "ein" oder "aus", handeln, ohne darauf beschränkt zu sein.

Überraschendweise hat sich gezeigt, dass der Aufwand, der betrieben werden muss, um eine technische Zulassung für ein erfindungsgemäßes elektrisches Gerät zu erhalten, vergleichsweise gering ist im Vergleich zu konventionellen Kommunikationsmöglichkeiten zwischen elektrischen Geräten, wie sie aus dem Stand der Technik bekannt sind.

Es ist im Sinne der Erfindung bevorzugt, dass die interne Funktionseinheit zum Schreiben und/ oder Lesen von Daten eingerichtet ist. Die interne Funktionseinheit ist insbesondere dazu in der Lage, Daten informationstechnologisch in die Versorgungsleitung einzupflegen, was im Sinne der Erfindung als "Schreiben von Daten" oder als "Aufmodulieren" bezeichnet wird. Die interne Funktionseinheit kann vorzugsweise auch dazu eingerichtet sein, Daten informationstechnologisch aus der Versorgungsleitung zu entnehmen bzw. herauszulesen, was im Sinne der Erfindung als "Lesen von Daten" oder als "De-Modulieren" bezeichnet wird. Vorzugsweise kann die interne Funktionseinheit eine Verbindung herstellen zwischen einer WLAN-Quelle und den Teilnehmern des Kommunikationssystems. Es kann aber im Sinne der Erfindung auch bevorzugt sein, dass durch die internen Funktionseinheiten eine Verbindung unter den Teilnehmern des vorgeschlagenen Kommunikationssystems erzeugt wird, also beispielsweise zwischen einer Werkzeugmaschine und einem Staubsauger.

In einer bevorzugten Ausgestaltung der Erfindung ist das elektrische Gerät ausgewählt aus einer Gruppe umfassend: Werkzeugmaschine, Staubsaugvorrichtung, Wassermanagementgerät, Vorschub-Vorrichtung und/oder Ladegerät, ohne darauf beschränkt zu sein. Grundsätzlich können alle Geräte, die auf einer Baustelle verwendet werden, ein elektrisches Gerät im Sinne der Erfindung sein, wobei die Erfindung selbstverständlich nicht auf Anwendungen im Baustellenbereich beschränkt ist. Vielmehr kann ein System oder ein Netz aus erfindungsgemäßen elektrischen Geräten in vielen technischen Gebieten zum Einsatz kommen. Bei den elektrischen Geräten, die auf einer Baustelle verwendet werden, kann es sich um Werkzeugmaschinen, wie Bohrmaschinen, Meißelgeräte, Schleif- oder Trenngeräte und/oder Schlitzgeräte, handeln oder auch um Hilfsgeräte, die zur Unterstützung der Arbeit der Werkzeugmaschinen verwendet werden. Solche Hilfsgeräte können beispielsweise die genannten Staubsaugvorrichtungen, Wassermanagement- oder Wasserrecyclinggeräte, Vorschub-Vorrichtungen und/oder Ladegeräte sein, ohne darauf beschränkt zu sein. Ladegeräte können beispielsweise auf solchen Baustellen zum Einsatz kommen, auf denen neben netzbetriebenen, auch akku- oder batteriebetriebene Werkzeugmaschine oder elektrische Geräte verwendet werden. Die Ladegeräte können dann vorteilhaftweise dazu verwendet werden, die Akkus oder Batterien dieser akku- oder netzbetriebenen elektrischen Geräte oder Werkzeugmaschinen aufzuladen.

In einem zweiten Aspekt betrifft die Erfindung ein System aus mindestens zwei vorgeschlagenen elektrischen Geräten, wobei die elektrischen Geräte über eine Versorgungsleitung mit elektrischer Energie versorgt werden können. Ein erstes elektrisches Gerät weist mindestens eine erste interne Funktionseinheit zum Aufmodulieren von Daten auf die Versorgungsleitung auf und ein zweites elektrisches Gerät weist mindestens eine zweite interne Funktionseinheit zum De-Modulieren von Daten von der Versorgungsleitung auf. Die für das elektrische Gerät eingeführten und beschriebenen Definitionen, technischen Wirkungen und Vorteile gelten für das vorgeschlagene System analog, um umgekehrt.

Es ist im Sinne der Erfindung bevorzugt, dass die elektrischen Geräte über das von ihnen gebildete System untereinander Daten austauschen können. Dazu ist es vorteilhafterweise nicht erforderlich, dass die mindestens zwei elektrischen Geräte direkt miteinander über eine Versorgungsleitung verbunden sind, sondern es ist ausreichend, dass die elektrischen Geräte, die miteinander kommunizieren sollen, mit einem gemeinsamen Stromnetz verbunden sind oder dass die Versorgungsleitungen zwischen den elektrischen Geräten ein solches gemeinsames Stromnetz bilden. Vorzugsweise sind die elektrischen Geräte, die miteinander kommunizieren sollen, Bestandteile eines gemeinsamen Stromnetzes, wobei das gemeinsame Stromnetz vorzugsweise die elektrischen Geräte des vorgeschlagenen Systems mit elektrischer Energie versorgt. Es ist im Sinne der Erfindung bevorzugt, dass das vorgeschlagene System auch als "Kommunikationssystem", "Kommunikationsnetz" oder "Kommunikationsnetzwerk" bezeichnet wird.

Das Kommunikationssystem kann selbstverständlich mehr als zwei elektrische Geräte umfassen, wobei es sich um verschiedene elektrische Geräte handeln kann. Das Kommunikationssystem kann beispielsweise verschiedene Werkzeugmaschinen, einen oder mehrere Staubsauger und verschiedene Ladevorrichtungen umfassen, wobei die elektrischen Geräte jeweils mindestens eine interne Funktionseinheit aufweisen. Vorzugsweise sind die internen Funktionseinheiten sowohl zum Lesen, als auch zum Schreiben von Daten ausgebildet. Es kann im Sinne der Erfindung aber auch bevorzugt sein, dass die internen Funktionseinheiten einzelner elektrischer Geräte des vorgeschlagenen Kommunikationssystems nur zum Lesen oder nur zum Schreiben ausgebildet sind. Insbesondere kann mit der Erfindung, die insbesondere in der Bereitstellung der internen Funktionseinheiten im Kontext von elektrischen Geräten besteht, eine Konnektivität der beteiligten, bevorzugt netzbetriebenen elektrischen Geräte ermöglicht werden. Bei den internen Funktionseinheiten kann es sich vorzugsweise um im Wesentlichen gleiche oder im Wesentlichen ähnliche Funktionseinheiten handeln. Es kann aber auch bevorzugt sein, dass die internen Funktionseinheiten weder gleich, noch ähnlich sind, solange sie zum Auf- und/oder De-Modulieren von Daten in oder von den Versorgungsleitungen geeignet sind.

Bei dem gemeinsamen Stromnetz kann es sich beispielsweise um ein Baustellennetz oder ein öffentliches Netz zur Versorgung mit elektrischer Energie handeln. Es stellt einen wesentlichen Vorteil der Erfindung dar, dass eine Kommunikationsmöglichkeit zwischen elektrischen, netzbetriebenen Geräten bereitgestellt werden kann, die nicht selbst direkt miteinander über ein Daten- oder Stromkabel miteinander drahtgebunden verbunden sein müssen. Das vorgeschlagene System wird im Sinne der Erfindung bevorzugt auch als "Netz" oder "Netzwerk" bezeichnet, wobei die genannten Begriffe synonym verwendet werden. Ein wesentlicher Vorteil der Erfindung besteht darin, dass die zwischen den beteiligten, vorzugsweise netzbetriebenen elektrischen Geräten vorhandenen Versorgungs- bzw. Stromleitungen für den Datenaustausch verwendet werden. Dazu sind vorzugsweise keine technischen Veränderungen an den Versorgungsleitungen bzw. -kabeln erforderlich. Stattdessen umfassen die an dem vorgeschlagenen Kommunikationsnetzwerk beteiligten elektrischen Geräte interne Funktionseinheiten zur Übertragung von Daten, wobei die internen Funktionseinheiten dazu eingerichtet sind, Daten auf die Versorgungsleitung aufzumodulieren und/oder Daten von der Versorgungsleitung zu de-modulieren.

Es ist erfindungsgemäß vorgesehen, dass das erste elektrische Gerät mindestens eine erste interne Funktionseinheit zum Aufmodulieren von Daten auf die Versorgungsleitung aufweist und ein zweites elektrisches Gerät mindestens eine zweite interne Funktionseinheit zum De-Modulieren von Daten von der Versorgungsleitung aufweist. Selbstverständlich können die elektrischen Geräte, die das vorgeschlagene System, Netz oder Netzwerk bilden, daneben jeweils eine weitere interne Funktionseinheit aufweisen, die die jeweils andere Funktion ausführen kann. Wenn beispielsweise ein erstes elektrisches Gerät eine erste interne Funktionseinheit zum Schreiben von Daten in das Stromnetz umfasst, kann dieses erste elektrische Gerät darüber hinaus auch eine weitere interne Funktionseinheit zum Lesen von Daten aus dem Stromnetz umfassen, d.h. eine interne Funktionseinheit zum De-Modulieren von Daten aus der Versorgungsleitung. Umgekehrt kann ein zweites elektrisches Gerät, das eine interne Funktionseinheit zum Lesen von Daten aus dem Stromnetz umfasst, zusätzlich eine weitere interne Funktionseinheit zum Schreiben von Daten in das Stromnetz, d.h. eine interne Funktionseinheit zum Aufmodulieren von Daten auf die Versorgungsleitung, umfassen.

Es ist im Sinne der Erfindung auch bevorzugt, dass die erste interne Funktionseinheit des ersten elektrischen Geräts neben dem Schreiben bzw. Aufmodulieren von Daten in die Versorgungsleitung bzw. in das Stromnetz auch zum Lesen bzw. De-Modulieren von Daten aus der Versorgungsleitung bzw. aus dem Stromnetz eingerichtet ist. Analog kann es im Sinne der Erfindung auch bevorzugt sein, dass die zweite interne Funktionseinheit des zweiten elektrischen Geräts neben dem Lesen bzw. De-Modulieren von Daten aus der Versorgungsleitung bzw. aus dem Stromnetz auch zum Schreiben bzw. Aufmodulieren von Daten in die Versorgungsleitung bzw. in das Stromnetz eingerichtet ist. Durch diese Mehrfach-Funktionalität der internen Funktionseinheiten kann ein besonders kompaktes und raumsparendes elektrisches Gerät bereitgestellt werden. Überraschenderweise kann auf diese Weise ein elektrisches Gerät sowohl zum Schreiben, als auch zum Lesen von Daten bereitgestellt werden, obwohl das elektrische Gerät nur eine interne Funktionseinheit umfasst.

Das bisher beschriebene Kommunikationssystem wird bevorzugt als leitungsgebundenes Kommunikationssystem, -netz oder-netzwerk bezeichnet. Es ist im Sinne der Erfindung bevorzugt, dass dem leitungsgebundenen Kommunikationssystem, -netz oder -netzwerk ein gemeinsames Stromnetz zugrunde liegt, wobei das gemeinsame Stromnetz zumindest die mindestens zwei elektrischen Geräte, die Bestandteil des vorgeschlagenen leitungsgebundenen Kommunikationssystems sind, mit elektrischer Energie versorgt. Das Stromnetz kann selbstverständlich auch weitere elektrische Geräte mit elektrischer Energie versorgen. Vorzugsweise kann das vorgeschlagene Kommunikationssystem das gemeinsame Stromnetz, welches zumindest die mindestens zwei beteiligen elektrischen Geräte mit elektrischer Energie bzw. Strom versorgt, umfassen. Mit anderen Worten kann das gemeinsame Stromnetz, an dem die mindestens zwei elektrischen Geräte des vorgeschlagenen Kommunikationssystems mit Versorgungsleitungen angeschlossen sind, Bestandteil des vorgeschlagenen Kommunikationssystems sein. Vorteilhafterweise kann das vorgeschlagene Kommunikationssystem ein lokales Energie- und Kommunikationsnetzwerk bilden, in dem Daten zwischen den bevorzugt netzbetriebenen elektrischen Geräten mit Hilfe von internen Funktionseinheiten der elektrischen Geräte und den Versorgungsleitungen zwischen den elektrischen Geräten ausgetauscht werden. Das Kommunikationssystem stellt vorzugsweise eine Trägerfrequenzanlage bzw. eine Trägerfrequenzvorrichtung dar, die mit Hilfe der internen Funktionseinheiten realisiert wird.

Das Auf- bzw. De-Modulieren der Daten bzw. der Datensignale erfolgt vorzugsweise im Hochfrequenzbereich, d.h. in einem Bereich von bevorzugt 100 bis 150 kHz, besonders bevorzugt bei ca. 120 kHz. Es ist im Sinne der Erfindung bevorzugt, dass das Kommunikationssystem eine Reichweite von bis zu 1.000 m aufweist, bevorzugt bis zu 600 m und am meisten bevorzugt bis zu 400 m. Darüber hinaus können mit dem Kommunikationssystem Übertragungsleistungen bzw. -raten von bis zu 2.500 Mbit/s, bevorzugt bis zu 2.000 Mbit/s erreicht werden.

Es ist im Sinne der Erfindung bevorzugt, dass die internen Funktionseinheiten der an dem Kommunikationssystem beteiligten elektrischen Geräte dazu in der Lage sind, Daten im Hochfrequenzbereich in das Stromnetz bzw. die Versorgungsleitung aufzumodulieren und/oder die Daten im Hochfrequenzbereich aus dem Stromnetz bzw. aus der Versorgungsleitung zu de-modulieren. Die modulierten Daten, die von den internen Funktionseinheiten der elektrischen Geräte in das zugrundliegende Stromnetz eingespeist werden, stellen vorzugsweise kleine, unschädliche Störungen innerhalb des Stromnetzes bzw. innerhalb des lokalen Energie- und Kommunikationsnetzwerk dar. Diese Störungen liegen vorteilhafterweise in einem Toleranzbereich der elektromagnetischen Verträglichkeit, so dass sie für den Menschen ungefährlich sind und auch andere Kommunikationsarten und Kommunikationsprotokolle, die in der Umgebung des lokalen Energie- und Kommunikationsnetzwerk verwendet werden, nicht stören oder beeinträchtigen. Insbesondere wird auch die Stromversorgung der beteiligen elektrischen Geräte durch die Störungen nicht in Mitleidenschaft gezogen.

Die internen Funktionseinheiten können vorzugsweise fest in den elektrischen Geräten des vorgeschlagenen Kommunikationssystems integriert vorliegen. Die internen Funktionseinheiten können allerdings auch austauschbare Module darstellen, die an dem elektrischen Gerät vorübergehend lösbar befestigt werden können. In dieser bevorzugten Ausgestaltung der Erfindung können die internen Funktionseinheiten besonders einfach ausgetauscht werden, beispielsweise in dem Falle, dass eine interne Funktionseinheit kaputt ist oder wegen Zeitablauf oder zu anderen Zwecken ausgebaut werden muss.

Es ist im Sinne der Erfindung bevorzugt, dass das System ein Gateway zur drahtlosen Kommunikation aufweist. Vorzugsweise kann das Gateway dazu eingerichtet sein, mit mobilen Kommunikationsvorrichtungen und/oder einer Cloud zu kommunizieren. Die Vorsehung des Gateways stellt eine Erweiterung des bisher beschriebenen, leitungsgebundenen Kommunikationssystems dar. Das Kommunikationssystem, welches ein Gateway aufweist, wird im Sinne der Erfindung bevorzugt als "erweitertes Kommunikationssystem, -netz oder-netzwerk" bezeichnet. Durch die Erweiterung des leitungsgebundenen Kommunikationssystems mit einem Gateway kann eine drahtlose Kommunikationsmöglichkeit mit weiteren elektrischen Geräten oder einer Cloud geschaffen werden, so dass Daten nicht nur leitungsgebunden zwischen den Teilnehmern des vorgeschlagenen leitungsgebundenen Kommunikationssystems ausgetauscht werden können, sondern vorteilhafterweise auch drahtlos mit mobilen Kommunikationsvorrichtungen und/oder einer Cloud. Bei den mobilen Kommunikationsvorrichtungen außerhalb des leitungsgebundenen Kommunikationssystems kann es sich beispielsweise um Mobiltelefone, Smartphones, Tablet-PCs, Laptops, Notebooks, Palm-PCs oder dergleichen handeln, ohne darauf beschränkt zu sein.

Ein wesentlicher Vorteil des um das Gateway erweiterten Kommunikationssystems besteht darin, dass mit Hilfe des Gateways von extern auf die bevorzugt netzbetriebenen elektrischen Geräte des leitungsgebundenen Kommunikationsnetzwerks zugegriffen werden kann. Während die beteiligten elektrischen Geräte untereinander mit Hilfe der internen Funktionseinheiten über die Versorgungsleitungen kommunizieren können ("leitungsgebundenes Kommunikationssystem, - netz oder -netzwerk"), kann über das Gateway von außen, d.h. aus der Ferne, auf die elektrischen Geräte zugegriffen werden ("erweitertes Kommunikationssystem, -netz oder -netzwerk"). Dadurch können beispielsweise maschinenbezogene Daten, wie Betriebszeiten, Wartungsanzeigen, Betriebs- oder Störungsparameter, Betriebszustände etc. von außen abgefragt bzw. von den elektrischen Geräten an die Außenwelt, die nicht Bestandteil des leitungsgebundenen Kommunikationsnetzwerks ist, übermittelt werden. Insbesondere müssen die externen Geräte oder die Cloud, die über das Gateway mit den elektrischen Geräten des Kommunikationssystems kommunizieren wollen, keine Strom- oder Versorgungsverbindung mit den elektrischen Geräten teilen und die externen Geräte oder die Cloud, die über das Gateway mit den elektrischen Geräten des Kommunikationssystems kommunizieren wollen, müssen auch nicht Teil des gemeinsamen Stromnetzes sein, das dem vorgeschlagenen Kommunikationsnetzwerk zugrunde liegt.

Ein weiterer Vorteil des um ein Gateway erweiterten Kommunikationssystems besteht darin, dass das Gateway besonders einfach und unkompliziert ausgetauscht werden kann, wenn für die Kommunikation von außen mit den elektrischen Geräten ein anderer drahtloser Kommunikationsstandard verwendet werden soll. Dadurch können zukunftsorientierte, neue Übertragungstechnologien besonders einfach in bestehende Kommunikationssysteme oder-netze implementiert werden, ohne alle elektrischen Geräte austauschen oder aufwändige Umbauarbeiten an den elektrischen Geräten vornehmen zu müssen. In einer bevorzugten Ausgestaltung der Erfindung ist das Gateway dazu eingerichtet, über Bluetooth, insbesondere low energy bluetooth (BLE) zu kommunizieren.

Weitere Vorteile ergeben sich aus der folgenden Figurenbeschreibung. Die Figur, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In der Figur sind gleiche und gleichartige Komponenten mit gleichen Bezugszeichen beziffert. Es zeigen:

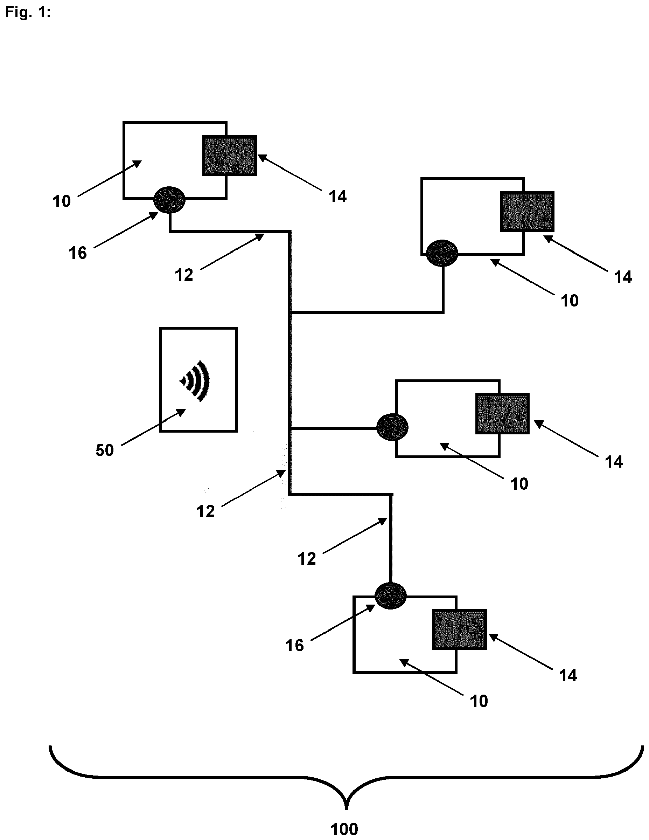

- Fig. 1: Ansicht einer bevorzugten Ausgestaltung des Kommunikationssystems

### Ausführungsbeispiele und Figurenbeschreibung:

Figur 1 zeigt eine bevorzugte Ausführungsform eines vorgeschlagenen Kommunikationssystems 100. Das vorgeschlagene Kommunikationssystem 100 weist mindestens zwei elektrische Geräte 10 auf, bei denen es sich beispielsweise um Werkzeugmaschinen, Staubsauger, Ladegeräte, Hilfsgeräte oder dergleichen handeln kann. Die elektrischen Geräte 10 des Kommunikationssystems 100 sind mit Versorgungsleitungen 12 verbunden, wobei die Versorgungsleitungen 12 ein gemeinsames Stromnetz bilden, welches dem vorgeschlagenen Kommunikationssystem 100 zugrunde liegt. Die Versorgungsleitungen 12 sind vorzugsweise dazu ausgebildet, die elektrischen Geräte 10 mit elektrischer Energie, d.h. Strom, zu versorgen. Die Versorgungsleitungen 12 können vorzugsweise zu einem öffentlichen oder einem Baustellen-Stromnetz gehören. Die Versorgungsleitungen 12 weisen vorzugsweise Stecker bzw. Netzstecker auf, die von Schnittstellen 16 der elektrischen Geräte 10 aufgenommen werden können. Bei den Schnittstellen 16 handelt es sich vorzugsweise um mechanische Schnittstellen, die insbesondere die Bildung einer Steckverbindung zwischen dem Stecker und der Schnittstelle 16 des elektrischen Geräts 10 ermöglichen.

Die elektrischen Geräte 10 des Kommunikationssystems 100 weisen darüber hinaus interne Funktionseinheiten 14 auf, mit denen die elektrischen Geräte 10 untereinander Daten austauschen können. Der Datenaustausch zwischen den elektrischen Geräten 10 erfolgt insbesondere draht- bzw. leitungsgebunden über die Versorgungsleitungen 12, die vorzugsweise ein gemeinsames Stromnetz bilden zwischen den elektrischen Geräten 10, die miteinander kommunizieren sollen.

Um von außen auf die elektrischen Geräte 10 des Kommunikationssystem 10 zugreifen zu können, kann das Kommunikationssystem 100 in einer bevorzugten Ausgestaltung ein Gateway 50 aufweisen. Mit Hilfe des Gateways 50 kann eine Kommunikationsverbindung zwischen dem Gateway 50 und den elektrischen Geräten 10 bzw. zwischen den elektrischen Geräten 10 und der Außenwelt bereitgestellt werden. Insbesondere können die elektrischen Geräte 10 mit Hilfe des Gateways 50 beispielsweise mit einer Cloud oder mit mobilen Kommunikationsvorrichtungen kommunizieren. Diese Kommunikationsverbindung mit der Außenwelt, d.h. der Welt außerhalb des bevorzugt leitungsgebundenen Kommunikationsnetzes 100, ermöglicht insbesondere den Zugriff von außen auf die elektrischen Geräte 10, so dass beispielsweise maschinenbezogene Daten, wie Gerätelaufzeiten, Wartungserfordernisse, Störmeldungen oder dergleichen, von externen Geräten ausgelesen werden können.

### Bezugszeichenliste

- 10: elektrisches Gerät
- 12: Versorgungsleitung
- 14: interne Funktionseinheit
- 16: Schnittstelle für einen Stecker der Versorgungsleitung
- 50: Gateway
- 100: Kommunikationssystem

## Patentansprüche

1. Elektrisches Gerät (10), das über eine Versorgungsleitung (12) mit elektrischer Energie versorgt werden kann,
**dadurch gekennzeichnet, dass**
das elektrische Gerät (10) eine interne Funktionseinheit (14) zur Übertragung von Daten aufweist, wobei die interne Funktionseinheit (12) dazu eingerichtet ist, Daten auf die Versorgungsleitung (12) aufzumodulieren und/oder Daten von der Versorgungsleitung (12) zu de-modulieren.

2. Elektrisches Gerät (10) nach Anspruch 1
**dadurch gekennzeichnet, dass**
die interne Funktionseinheit (14) zum Schreiben und/oder Lesen von Daten eingerichtet ist.

3. Elektrisches Gerät (10) nach Anspruch 1 oder 2
**dadurch gekennzeichnet, dass**
das elektrische Gerät (10) ausgewählt ist aus einer Gruppe umfassend: Werkzeugmaschine, Staubsaugvorrichtung, Wassermanagementgerät, Vorschub-Vorrichtung und/oder Ladegerät.

4. Elektrisches Gerät (10) nach einem der vorhergehenden Ansprüche
**dadurch gekennzeichnet, dass**
das elektrische Gerät (10) eine Schnittstelle (16) zur Aufnahme eines Steckers der Versorgungsleitung aufweist.

5. System (100) aus mindestens zwei elektrischen Geräten (10, 10') nach einem der vorhergehenden Ansprüche, wobei die elektrischen Geräte (10) über eine Versorgungsleitung (12) mit elektrischer Energie versorgt werden können,
**dadurch gekennzeichnet, dass**
ein erstes elektrisches Gerät (10) mindestens eine erste interne Funktionseinheit (14) zum Aufmodulieren von Daten auf die Versorgungsleitung (12) aufweist und ein zweites elektrisches Gerät (10') mindestens eine zweite interne Funktionseinheit (14') zum De-Modulieren von Daten von der Versorgungsleitung (12) aufweist.

6. System (100) nach Anspruch 5
**dadurch gekennzeichnet, dass**
das System (100) ein Gateway (50) zur drahtlosen Kommunikation aufweist.

7. System (100) nach Anspruch 5 oder 6
**dadurch gekennzeichnet, dass**
das Gateway (50) dazu eingerichtet ist, mit mobilen Kommunikationsvorrichtungen und/oder einer Cloud zu kommunizieren.
